# EUROPEAN PATENT APPLICATION

(11) **EP 2 011 978 A1**
(43) Date of publication of application: **07.01.2009**
(21) Application number: 07111828.5
(22) Date of filing: 05.07.2007
(51) Int. Cl.: F02C 7/10

(54) **Microturbine assembly**

(71) Applicant: Artes Tecnologia Energetica, S.L., 08302 Mataro Barcelona (ES)
(72) Inventor: Artés de Arcos Marco, Jesús, 08302 Mataró (Barcelona) (ES)
(74) Representative: Barlocci, Anna

(57) **Abstract**

It is suitable for a combined electric, thermal and/or mechanical power generation by being adapted to selectively operate according to a first operating mode for supplying mechanical power to a shaft to produce electrical power through an electrical generator (60) in which the assembly (10) includes a recuperator (200) adapted for preheating fluid; and a second operating mode in which the assembly (10) is operated according to simple cycle microturbine for supplying thermal power. It is adapted for receiving a removable, interchangeable inner module (100) suitable for channelling the flow of circulating fluid when the assembly (10) is operated according to said second operating mode. Said inner module (100) includes a series of heat exchange and/or noise reducing fins.

## Description

### Field of the invention

The present invention relates to a mechanically simple, lightweight, small sized microturbine assembly suitable to be used in building and construction sites, as well as emergency applications, housing and places where poor o no electric power reaches the areas to supply.

The microturbine assembly of the invention comprises a housing, inside of this housing an axial turbine wheel, a compressor, a combustor; and an electric generator which is coupled to the microturbine are received therein.

### BACKGROUND ART

Due to the growing concern over clean electric power generation turbines are increasingly used as power sources for local area electric generation. However, turbines are somewhat bulky, heavy and inefficient in this application. Microturbines are therefore lately proposed in these applications.

An example of microturbines is disclosed in US2005126175 that refers to a microturbine system that comprises a compressor and an axial turbine wheel which are joined by a common shaft. The driving fluid enters the compressor at ambient conditions of pressure and temperature and it is compressed. The compressed driving fluid is preheated by the exhaust gases from the microturbine, then it passes through a combustor and after that it goes across the turbine wheel where the expansion force of the hot driving fluid is translated into rotation of the common shaft for driving both, the compressor and a suitable power device such as an electrical generator. The system further includes a recuperator to preheat driving fluid prior to entering the combustor.

The microturbine system in US2005126175 is to be mainly used for electric generation purposes since the temperature of the microturbine exhaust is lowered by the recuperator, which renders it not to be suitable for generating of other forms of energy, for example, heat. For using this microturbine system for other forms of energy generation, the assembly has to be modified by changing parts thereof.

### SUMMARY OF THE INVENTION

The present invention provides a combined heat and power (CHP) microturbine assembly adapted for efficiently providing thermal, electric and mechanical power with no complex modifications therein. More particularly, the microturbine assembly of the invention is suitable for a combined electric, thermal and/or mechanical power generation by being adapted to selectively operate according to:
- a first operating mode for supplying mechanical power to a shaft to produce electrical power through an electrical generator in which the assembly includes a recuperator adapted for preheating fluid; and
- a second operating mode in which the assembly is operated according to simple cycle microturbine for supplying thermal power.

The microturbine assembly of the invention comprises an external housing. At the rear part of this housing there is an exhaust dome whose function is to deflect the flow of exhaust gases produced by the microturbine. A turbine wheel, such as an aeronautics-type adapted for producing thermal and electrical energy, is received inside said annular housing. More specifically, said turbine wheel is of the axial flow type, that is, with the fluid flowing along the axis thereof.

In the following, 'fuel or combustible' as used herein will comprise any suitable clean combustible such as biodiesel and biogas, as well as other conventional combustibles in liquid or gas state. Also in the following, 'fluid' as used herein will comprise comburent air which is necessary to carry out the combustion, also with the fuel.

When the fluid is compressed by the compressor then is mixed with the fuel to burn them at the combustor and the resulting exhaust gases are sent to the turbine wheel through a guide vane, said guide vane being a static piece which directs the exhaust gases to the properly direction to move the turbine wheel. The turbine wheel is coupled via a common shaft to the compressor and, in turn, to an electric generator. The latter has been adapted for producing high and variable frequency electrical power. Turbine wheel, compressor and shaft are referred to as 'rotor system'.

The microturbine assembly of the invention comprises a removable, interchangeable inner module adapted to channel the flow of circulating fluid. Specifically, the removable, interchangeable inner module comprises a hollow body adapted for allowing the microturbine assembly of the invention to work properly by closing the fluid circuit in such a way the fluid is allowed to continuously pass through the compressor and turn back to the combustor.

The microturbine assembly and its housing, both are adapted to receive any possible embodiments of the removable, interchangeable inner module without making changes in the inner configuration thereof. This is possible thanks to the configuration of a joint provided between the removable, interchangeable inner module and the microturbine assembly. Therefore, the removable, interchangeable inner module may be easily and quickly removed and mounted therein by only disassembling an exhaust closing member. This feature further enables a very efficient maintenance of the microturbine assembly of the invention.

The microturbine assembly of the invention is adapted to selectively operate according to different operating modes as explained below.

In a first operating mode the microturbine assembly has been created with the aim of supplying maximum mechanical power to the shaft with minimum consumption. By coupling the microturbine assembly of the invention to an electrical generator the microturbine assembly is able to produce efficiently electrical power. Therefore, mechanical power generation and electric power generation are optimized through this first operating mode where an electrical generator is provided.

In this first operating mode the removable, interchangeable inner module comprises a recuperator which is fitted inside the housing. Recuperator preheats the fluid before entering the combustor using heat from turbine exhaust. By using the recuperator, it is possible to reduce the amount of combustible for heating the compressed fluid so that efficiency is increased.

In this first operating mode the microturbine assembly of the invention also supplies thermal energy.

In a second operating mode, the microturbine assembly is operated according to a simple cycle microturbine. Thermal power generation is optimized through this second operating mode. Compressed fluid is heated under constant pressure conditions with the resulting exhaust gases being expanded through the turbine wheel such that a great amount of heat is available. In this second operating mode electrical power is also supplied because an electrical generator coupled to the microturbine shaft is provided.

In the second operating mode the removable, interchangeable inner module comprises a cylindrical hollow body with openings and an outer shell for sealing the assembly, such as an inner chamber. The openings of the cylindrical hollow body are distributed in a first series of holes at the front, and a second series of holes at the back, so compressed fluid, (which has been compressed by the compressor) enters said first openings of the cylindrical body of this inner chamber and exits said second openings to the combustor. The size of both openings is such that the flow of compressed fluid can perform the full circuit with minimum pressure drop. This is the basic embodiment of the removable, interchangeable inner module that enables this second operating mode.

In the microturbine assembly of the invention the return circuit of the fluid to the combustor passes a cone-shaped exhaust tube surrounding it. This feature further enables a reduction of consumption, because the configuration of the exhaust tube explained makes the comburent air to be pre-heated. This exhaust tube operates at high working temperature conditions and this cylindrical body arrangement enables a part of this heat can be exchanged with fluid passing surrounding it. Due to the exhaust tube sliding configuration the assembly can be expanded and these thermal expansions do not adversely affect the machine operation.

Microturbine assembly as described according to the present invention enables the same equipment to respond to different situations of combined electrical, thermal and/or mechanical power generation. This high versatility of the invention is due to its design that enables the assembly of the different embodiments of the removable, interchangeable inner module, adapted for optimizing electrical, thermal or mechanical power generation according to energetic necessities and requirements wanted, without having to perform complex modifications therein.

In some embodiments, the removable, interchangeable inner module may include a series of noise reducing fins. Further embodiments of the removable, interchangeable inner module comprise elements for exchanging heat from exhaust fluid with the inner fluid such as recuperator or a heat exchanger and also for noise reducing purposes.

The different configurations of the invention enable the variation of its applications because the energy balance of electric, thermal and mechanical power is shared out in different proportions in each operating mode, without greater variations on the total efficiency.

The microturbine assembly of the invention makes easy a distributed or decentralized energy supply. In this case, the power source can be located nearer the user such that distribution losses are significantly reduced so a high efficiency rate can be achieved.

The microturbine assembly of the present invention is able to produce electric energy with small size and not much weight (in contrast to large sized, heavy and bulky prior art turbine generators), suitable to be used in building and construction sites, as well as emergency applications, housing and places where poor or no electric power does not reach the areas to supply. The reduced size of the assembly eases transportation operations.

### BRIEF DESCRIPTION OF THE DRAWINGS

A particular embodiment of microturbine assembly according to the present invention will be described in the following, only by way of non-limiting example, with reference to the appended drawings, in which:
Fig.1 is a cutaway view of one embodiment of a microturbine assembly according to the invention adapted for operating in a second operating mode in which the removable, interchangeable inner module is shown but with some inner parts not shown for clarity;
Fig.2 is a cutaway view of the microturbine assembly of the invention adapted for operating in a first operating mode, in which a recuperator is provided inside the housing and wherein flow lines are depicted; and
Fig. 3 is a cutaway view of the microturbine assembly in fig. 2 in which the generator is shown.

### DETAILED DESCRIPTION OF PARTICULAR EMBODIMENTS

In the drawings, a combined heat and power (CHP) microturbine assembly 10 according to the present invention is shown.

Microturbine assembly 10 can operate with liquid or gas clean combustibles, for example, biodiesel and biogas, respectively. By 'fuel' is meant herein any suitable gas or liquid clean or traditional combustibles. When 'fluid' is meant herein refers to comburent air.

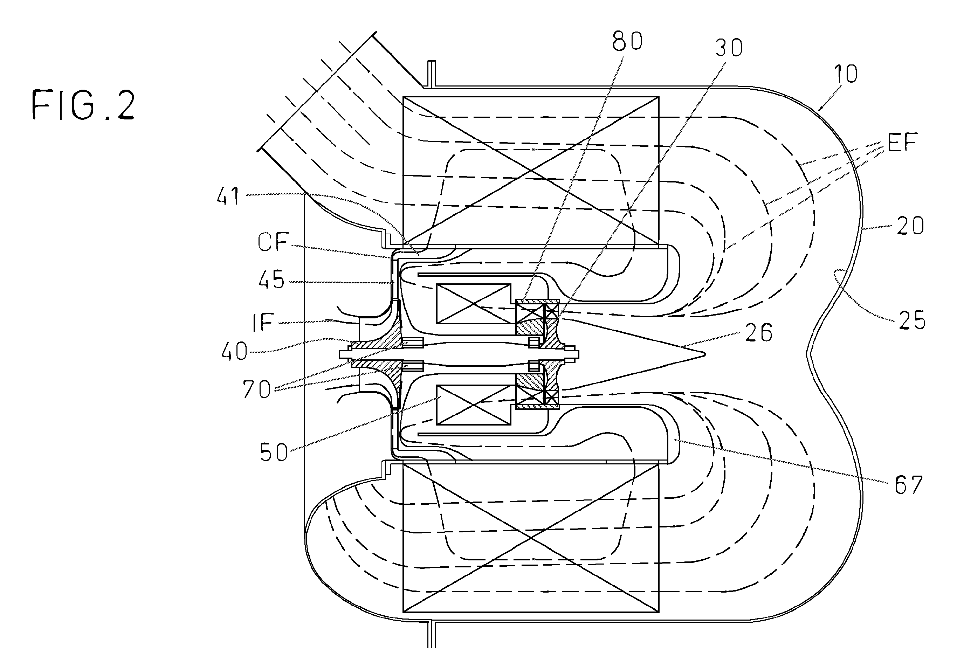

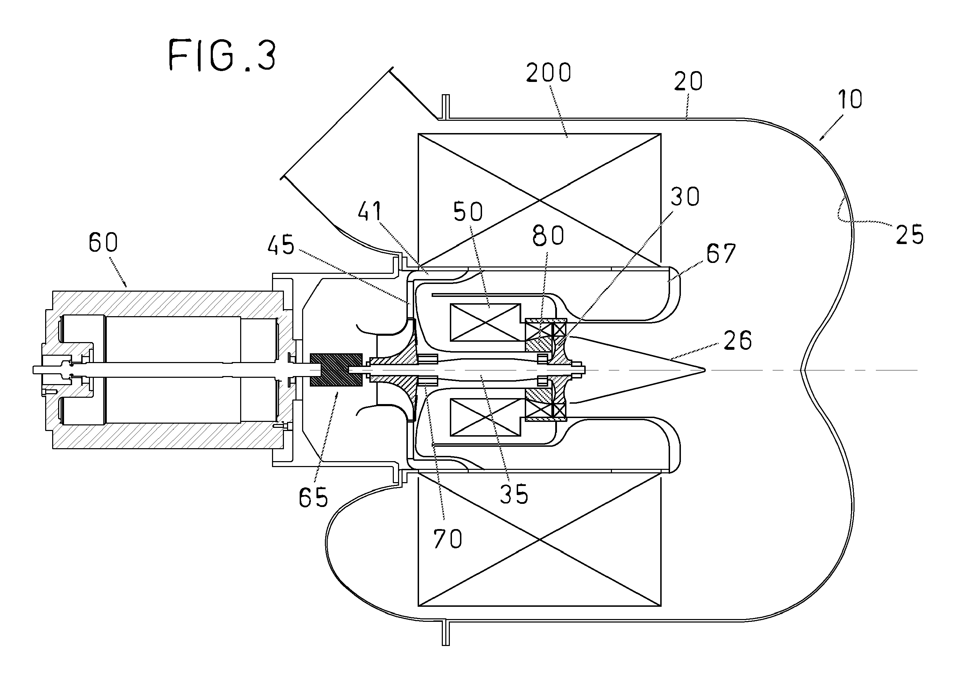

Microturbine assembly 10 has a microturbine body 55 and an outer housing 20, shown in figures 2 and 3, which is provided with an exhaust dome 25 at its rear part. Exhaust fluid EF exiting the assembly is suitably directed backwards by the exhaust dome 25 and a cone-shaped exhaust tube 26 as shown by flow lines in figure 2.

Inside the housing 20, an axial turbine wheel 30 is provided having a common shaft 35. By axial turbine wheel is meant herein a rotor in which the fluid flows along a longitudinal axis thereof, that is, substantially in the direction of shaft 35. An example of axial turbine wheel 30 used in the invention is an aeronautics-type turbine adapted for producing electric and thermal energy.

Thanks to the configuration of the turbine wheel of the microturbine assembly of the invention, more than one turbine wheel can be included in the assembly. Therefore, the invention can be multistage if it is necessary, because the microturbine assembly is able to comprise as much expansion stages as turbine wheels have been provided in the assembly.

Common shaft 35 is supported by a bearing assembly 70 suitable for ensuring an efficient rotation thereof. In the embodiment shown, a multiple preload bearing assembly 70 is provided suitable for a full-direction working without causing long displacements of parts and preventing fixed parts from being interfered to each other. Bearing assembly 70 is provided having hybrid bearings (stainless steel races and ceramic balls) and may include either air bearings which do not need lubrication or ceramic bearings (ceramic races and balls).

Microturbine assembly 10 further comprises a hybrid axial-radial compressor 40. Compressor 40 is coupled through the common shaft 35 to the turbine wheel 30 and it compresses incoming fluid IF (see figure 2). Compressed fluid CF (figure 2) passes through diffuser vanes 45, then arrives at a small annular chamber 41 where the fluid is prepared to enter radially and without turbulences at the removable, interchangeable inner module 100.

Diffuser has a larger maximum diameter greater than the body of the microturbine 55 such that a flow back channel 66 is formed between the removable, interchangeable inner module 100 and the body of the microturbine 55.

Said compressed fluid CF is taken through the flow back channel 66 to the annular combustor 50 that surrounds the microturbine shaft 35. The air and fuel are mixed in the annular combustor chamber 50 and combustion is performed. The resulting exhaust gases EF are sent to the axial turbine wheel 30 through an exit guide vane 80. Fluid expansion as well as kinetics energy transmission from fluid to shaft 35 occurs through turbine wheel 30. Exhaust fluid EF exits the system 10 surrounding the cone-shaped exhaust tube 26.

As shown in figure 3, an electric generator 60 is also provided. The electric generator 60 is coupled to the axial turbine wheel 30 via a coupler assembly 65 through said common shaft 35. The electric generator 60 generates high and variable frequency electrical power.

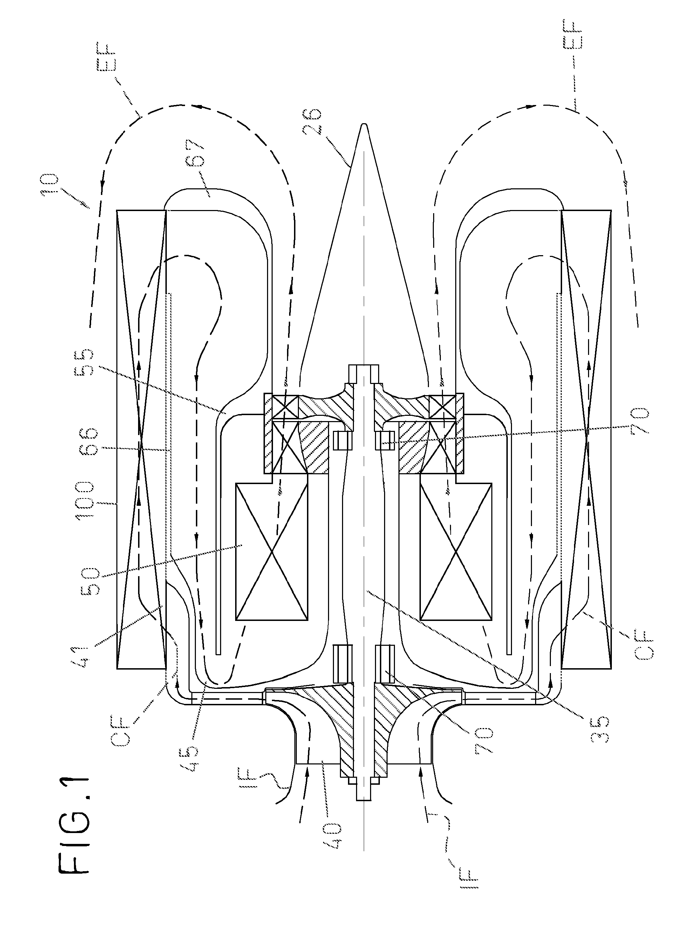

A microturbine assembly 10 as the one described can be selectively operated according to a second operating mode with the arrangement shown in figure 1 and according to a first operating mode with the arrangement shown in figures 2 and 3.

In a first operating mode the microturbine assembly has been created with the aim of supplying maximum mechanical power to the shaft with minimum consumption. By coupling the microturbine assembly of the invention to an electrical generator 60 the microturbine assembly 10 is able to produce efficiently electrical power. Therefore, mechanical power generation and electric power generation are optimized through this first operating mode where an electrical generator 60 is provided.

In this first operating mode a recuperator 200 is fitted inside the housing 20. Fluid is preheated by recuperator 200 before entering the combustor 50 using heat from exhaust fluid EF. In this case, compressed fluid is pre-heated more than in the second operating mode, since in the second operating mode the fluid is only pre-heated when passing surrounding the exhaust tube 26. In the first operating mode compressed fluid is pre-heated when passing through the recuperator 200 (heat exchanger) which has high efficiency, and also when surrounding the exhaust tube 26. So, by using the recuperator 200, it is possible to reduce the consumption of combustible. This enables an efficient electrical power generation.

In the second operating mode, the microturbine assembly 10 is operated according to a simple cycle microturbine wherein thermal energy generation is optimized and electrical power is also supplied because an electrical generator 60 coupled to the microturbine shaft is provided. Injected fuel mixed with compressed air CF is burned in the combustor chamber 50 and the resulting exhaust fluid EF is expanded through a guide vane and the turbine wheel 30. The expansion of the exhaust gases is done in both guide vane, that is a static piece which directs the exhaust gases to the properly direction to move the turbine wheel, and turbine wheel. The combustible is supplied to the combustor chamber by an independent injector system.

In this second operating mode, the housing 20 of the microturbine assembly 10 receives therein the basic embodiment of the removable, interchangeable inner module 100, as shown in figure 1. The basic removable, interchangeable inner module 100 channels the flow of circulating fluid and closes the fluid circuit in such a way the fluid is allowed to continuously pass through the compressor 40 to be directed back to the combustor 50. The removable, interchangeable inner module 100 may include a series of noise reducing fins (not shown) as necessary.

In this basic configuration, the removable, interchangeable inner module 100 comprises a cylindrical hollow body with openings and an outer shell for sealing the assembly. The openings of the cylindrical hollow body are distributed in a first series of holes at the front, and a second series of holes at the back. Compressed fluid CF enters said first openings of the cylindrical body and exits said second openings thereof to combustor 50. First and second openings are so sized such that the flow of compressed fluid CF can perform the full circuit with minimum pressure drop.

The removable, interchangeable inner module 100 may be easily removed by only disassembling an exhaust closing member 67.

In this operating mode, no recuperator is provided in the assembly 10 inside the housing 20. However, consumption is reduced since compressed fluid is pre-heated: the cone-shaped exhaust tube 26 works at high working temperature conditions and the cylindrical body arrangement enables a part of this heat to be exchanged with air passing surrounding it. Due to the exhaust tube sliding configuration the assembly is allowed to be heat expanded and these thermal expansions do not adversely affect the machine operation.

Possible removable, interchangeable inner module 100 embodiments may comprise elements (not shown) for exchanging heat from exhaust fluid EF with the inner fluid and/or for noise reducing purposes. These elements may comprise fins (not shown) having different configurations for acting as silencers or heat exchangers.

## Claims

1. Microturbine assembly (10), **characterized in that** it is suitable for a combined electric, thermal and/or mechanical power generation by being adapted to selectively operate according to a first operating mode for supplying mechanical power to a shaft to produce electrical power through an electrical generator (60) in which the assembly includes a recuperator (200) adapted for preheating fluid; and a second operating mode in which the assembly (10) is operated according to simple cycle microturbine for supplying thermal power.

2. Microturbine assembly (10) as claimed in claim 1, wherein it is adapted for receiving a removable, interchangeable inner module (100) suitable for channelling the flow of circulating fluid when the assembly (10) is operated according to said second operating mode.

3. Microturbine assembly as claimed in claim 2, wherein said removable, interchangeable inner module (100) includes a series of heat exchange and/or noise reducing fins.
